# EUROPEAN PATENT SPECIFICATION

(11) **EP 3 124 238 B1**
(45) Date of publication and mention of the grant of the patent: **09.10.2024**
(21) Application number: 15767926.7
(22) Date of filing: 25.03.2015
(51) Int. Cl.: B32B 27/20, B32B 7/06, B32B 7/12

(54) **SHEET FOR THREE-DIMENSIONAL MOLDING**
FOLIE FÜR DREIDIMENSIONALES FORMEN
FEUILLE POUR MOULAGE TRIDIMENSIONNEL

(30) Priority: 26.03.2014 JP 2014063760
(43) Date of publication of application: 01.02.2017
(73) Proprietor: Dai Nippon Printing Co., Ltd., Tokyo 162-8001 (JP)
(72) Inventor: MATSUMORI, Masaaki, Tokyo 162-8001 (JP); NODA, Akihisa, Tokyo 162-8001 (JP); KAWANISHI, Hiroki, Tokyo 162-8001 (JP)
(74) Representative: Beck Greener LLP
(86) International application number: PCT/JP2015/059130
(87) International publication number: WO 2015/147057

(56) References cited:
- EP-A1- 2 669 085
- JP-A- 2006 044 195
- JP-A- 2011 213 001
- JP-A- 2013 208 858
- JP-A- 2013 208 858
- JP-A- 2014 019 720

## Description

### TECHNICAL FIELD

The present invention relates to a sheet for three-dimensional molding, which has excellent scratch resistance and moldability and which has effectively reduced interference fringes, and a resin molded article obtained using the sheet for three-dimensional molding.

### BACKGROUND ART

For resin molded articles to be used in vehicle interior components, building interior materials, household electric appliance housings and so on, and resin molded articles to be used in organic glass that is used as an alternative material for inorganic glass, etc., techniques for laminating a surface protective layer using a sheet for three-dimensional molding for the purpose of surface protection and impartment of a design are used. As a typical example of the method for producing such a resin molded article, an injection molding simultaneous decorating method is known. The injection molding simultaneous decorating method is a method in which a sheet for three-dimensional molding, which is inserted into a mold during injection molding, is integrated with a molten resin injected into a cavity, so that a surface protective layer is formed on the surface of a resin molded body. The injection molding simultaneous decorating method is generally classified broadly into an injection molding simultaneous lamination method and an injection molding simultaneous transfer method based on a difference in configuration of sheets for three-dimensional molding, which are to be integrated with a molded resin.

In the injection molding simultaneous transfer method, for example, a sheet for three-dimensional molding for injection molding simultaneous transfer, which includes a transfer layer including a surface protective layer, is heated from the transfer layer side by a heating platen with the transfer layer facing the inside of a mold, the sheet for three-dimensional molding is molded so as to follow the shape of the inside of the mold, so that the sheet for three-dimensional molding is brought into close contact with the inner surface of the mold to close the mold, a molten molding resin is then injected into a cavity to integrate the sheet for three-dimensional molding and the molding resin, a resin molded article is then taken out from the mold, and a base material of the sheet for three-dimensional molding is separated to obtain a resin molded article with a transfer layer transferred thereto.

In a sheet for three-dimensional molding as described above, the surface protective layer may be formed of an ionizing radiation curable resin for the purpose of, for example, imparting excellent scratch resistance to the surface of the resin molded article. Sheets for three-dimensional molding, which include a surface protective layer formed of an ionizing radiation curable resin as described above, include those in which the surface protective layer is uncured in the state of a sheet for three-dimensional molding, and is cured after the sheet for three-dimensional molding is molded to be integrated with a molded resin (e.g. Patent Documents 1 and 2), and those in which the surface protective layer is cured before the sheet for three-dimensional molding is molded (e.g. Patent Document 3).

The former sheets for three-dimensional molding have the advantage that since the surface protective layer is uncured, the sheet for three-dimensional molding is soft, and thus cracks are hardly generated during molding. However, in the case of these sheets for three-dimensional molding, a resin molded article having a three-dimensional shape in which the sheet for three-dimensional molding is integrated with a molded resin should be subjected to a curing treatment, so that the process is complicated. Accordingly, in recent years, the need for the latter sheets for three-dimensional molding in which the surface protective layer is cured in the state of a sheet for three-dimensional molding has been increased.

On the other hand, in recent years, further improvement of scratch resistance has been required, and as a technique for meeting the requirement, a method is known in which inorganic particles such as silica particles are blended in the surface protective layer. For example, a technique is known in which the surface protective layer is formed using an ionizing radiation curable resin and reactive silica particles having reactivity with the ionizing radiation curable resin (e.g. Patent Documents 1 and 2). However, when a large amount of inorganic particles having a large particle size are blended in the surface protective layer, there is a problem that cracks are easily generated in the surface protective layer during molding, and therefore in the field of sheets for three-dimensional molding, particles having a particle size of several tens nm are normally used. Particularly in sheets for three-dimensional molding in which the ionizing radiation curable resin is cured in the state of a sheet for three-dimensional molding, cracks etc. are more easily generated during molding as compared to sheets for three-dimensional molding in which the ionizing radiation curable resin is cured after molding, and therefore the tendency of favoring the use of inorganic particles having a small particle size is remarkable.

However, when the content of silica particles having a particle size as described above is increased, scratch resistance etc. is improved, but there is a problem that when a sheet for three-dimensional molding or a resin molded article obtained using the sheet is placed under a three-wavelength light source, a rainbow-colored unevenness called an interference fringe occurs on a surface of the surface protective layer, leading to impairment of design property.

### PRIOR ART DOCUMENTS

### PATENT DOCUMENTS

Patent Document 1: Japanese Patent Laid-open Publication No. 2009-137219
Patent Document 2: Japanese Patent Laid-open Publication No. 2012-41479
Patent Document 3: Japanese Patent Laid-open Publication No. 2011-88420 JP2014 019720 describes the formation of a 'hard coat layer-forming layer' in a decorative sheet. The hard coat layer-forming layer is a uncured product which is cured only after moulding and the removal of the peeling layer.
   JP2013 208858 describes obtaining a moulded article by placing a molten resin on a photocurable sheet and photo curing the photocurable resin composition on the surface of the moulded article by light irradiation. The photocurable sheet comprises a base material, with a hard coat layer laminated thereon, wherein the hard coat layer is formed of a resin composition containing an ionizing radiation curable resin. Partial curing of this hard coat layer is described. JP 2011 213001 A discloses a sheet which includes a base material with a surface protective layer laminated thereon, wherein the surface protective layer is formed of a cured product of a resin composition containing an ionizing radiation curable resin.

### SUMMARY OF THE INVENTION

### PROBLEMS TO BE SOLVED BY THE INVENTION

In view of the above-mentioned problems, a main object of the present invention is to provide a sheet for three-dimensional molding, which has excellent scratch resistance and moldability and which has effectively reduced interference fringes. Further, an object of the present invention is to provide a resin molded article obtained using the sheet for three-dimensional molding.

### MEANS FOR SOLVING THE PROBLEM

In order to achieve the above-mentioned object, the present inventors have extensively conducted studies. As a result, the present inventors have found that a sheet for three-dimensional molding which includes a base material with at least a surface protective layer laminated thereon, wherein the surface protective layer is formed of a cured product of a resin composition containing an ionizing radiation curable resin and inorganic particles having an average particle size of 100 nm or more, wherein the curing of the resin composition uses an amount of irradiation with ionizing radiation with which the crosslinking density of the surface protective layer is saturated, the content of the inorganic particles in the surface protective layer is 40% by mass or more, and the average particle size of the inorganic particles is in the range of 100 to 500 nm, has excellent scratch resistance and moldability and has effectively reduced interference fringes. The present invention is an invention that has been completed by further conducting studies based on the above-mentioned findings.

The invention is defined in the appended independent claims. Further, preferred embodiments are covered by the dependent claims.

### ADVANTAGES OF THE INVENTION

According to the present invention, there can be provided a sheet for three-dimensional molding, which has excellent scratch resistance and moldability and which has effectively reduced interference fringes. Further, according to the present invention, there can be provided a decorative resin molded article obtained using the sheet for three-dimensional molding.

### BRIEF DESCRIPTION OF THE DRAWINGS

Fig. 1 is a schematic view of a cross section structure of one form of a sheet for three-dimensional molding according to the present invention.
Fig. 2 is a schematic view of a cross section structure of one form of a resin molded article with a support according to the present invention.
Fig. 3 is a schematic view of a cross section structure of one form of a resin molded article according to the present invention.

### EMBODIMENTS OF THE INVENTION

### 1. Sheet for three-dimensional molding

A sheet for three-dimensional molding according to the present invention is a sheet for three-dimensional molding (laminated sheet) which includes a base material with at least a surface protective layer laminated thereon, wherein the surface protective layer is formed of a cured product of a resin composition containing an ionizing radiation curable resin and inorganic particles having an average particle size of 100 nm or more wherein the curing of the resin composition uses an amount of irradiation with ionizing radiation with which the crosslinking density of the surface protective layer is saturated, the content of the inorganic particles in the surface protective layer is 40% by mass or more, and the average particle size of the inorganic particles is in the range of from 100 to 500 nm. Since the sheet for three-dimensional molding according to the present invention has a configuration as described above, it has excellent scratch resistance and moldability and has effectively reduced interference fringes. As described later, the sheet for three-dimensional molding according to the present invention is not required to include a decorative layer etc., and may be, for example, transparent. The sheet for three-dimensional molding according to the present invention may be a sheet for three-dimensional molding for lamination in which the base material is integrated with a resin molded article, or may be a sheet for three-dimensional molding for transfer (transfer sheet for three-dimensional molding) in which the base material is ultimately separated from a resin molded article. Hereinafter, the sheet for three-dimensional molding according to the present invention will be described in detail mainly for the sheet for three-dimensional molding for transfer.

### Laminated structure of sheet for three-dimensional molding

The sheet for three-dimensional molding according to the present invention includes at least a surface protective layer 3 on a base material 1. A surface of the base material 1 on the surface protective layer 3 side may be provided with a release layer 2 as necessary for the purpose of, for example, improving separability between the base material 1 and the surface protective layer 3. A primer layer 4 may be provided under the surface protective layer 3 (on a side opposite to a support 10) as necessary for the purpose of, for example, improving adhesion between the surface protective layer 3 and a layer adjacent thereto. A decorative layer 5 may be provided as necessary for the purpose of, for example, imparting decorativeness to the sheet for three-dimensional molding. The sheet for three-dimensional molding may include an adhesive layer 6 as necessary for the purpose of, for example, improving adhesion between the surface protective layer 3, the decorative layer 5 or the like and a molded resin layer 8 or the like. A transparent resin layer 7 may be provided for the purpose of improving adhesion between the primer layer 4 and the adhesive layer 6.

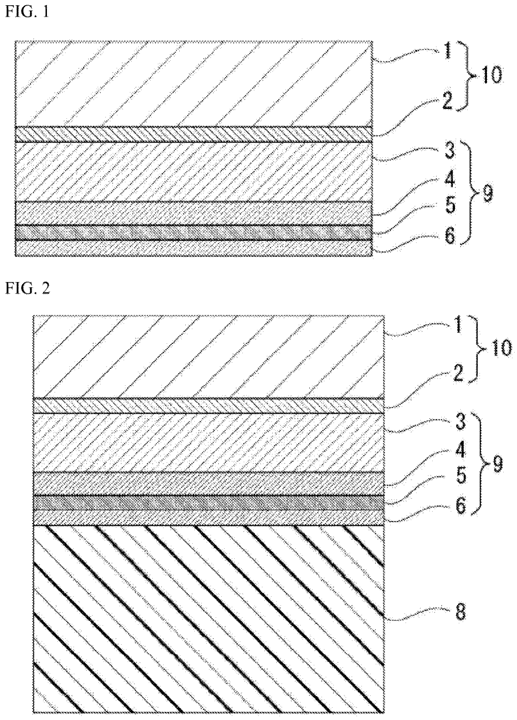

Examples of the laminated structure of the sheet for three-dimensional molding according to the present invention include a laminated structure in which a base material and a surface protective layer are laminated in this order; a laminated structure in which a base material, a release layer and a surface protective layer are laminated in this order; a laminated structure in which a base material, a release layer, a surface protective layer and a decorative layer are laminated in this order; a laminated structure in which a base material, a release layer, a surface protective layer, a decorative layer and an adhesive layer are laminated in this order; a laminated structure in which a base material, a release layer, a surface protective layer, a primer layer, a decorative layer and an adhesive layer are laminated in this order; and a laminated structure in which a base material, a release layer, a surface protective layer, a primer layer, a transparent resin layer and an adhesive layer are laminated in this order. As one aspect of the laminated structure of the sheet for three-dimensional molding according to the present invention, Fig. 1 shows a schematic view of a cross section structure of one form of a sheet for three-dimensional molding in which a base material, a release layer, a surface protective layer, a primer layer, a decorative layer and an adhesive layer are laminated in this order.

### Compositions of layers forming sheet for three-dimensional molding

### [Support 10]

The sheet for three-dimensional molding according to the present invention includes as the support 10 the base material 1, and the release layer 2 as necessary. As described later, the surface protective layer 3 formed on the base material 1, and the primer layer 4, pattern layer 5, adhesive layer 6, transparent resin layer 7 and so on which are additionally provided as necessary form a transfer layer 9. In the present invention, the sheet for three-dimensional molding and the molded resin are integrally molded, the support 10 and the transfer layer 9 are then peeled from each other at the interface therebetween, and the support 10 is separated and removed to obtain a resin molded article.

### (Base material 1)

In the present invention, the base material 1 is used as the support 10 which serves as a support member in the sheet for three-dimensional molding. The base material 1 for use in the present invention is selected in consideration of suitability for vacuum molding, and typically a resin sheet formed of a thermoplastic resin is used. Examples of the thermoplastic resin include polyester resins; acrylic resins; polyolefin resins such as polypropylene and polyethylene; polycarbonate resins; acrylonitrile-butadiene-styrene resins (ABS resins); and vinyl chloride resins.

In the present invention, it is preferable to use a polyester sheet as the base material 1 from the viewpoint of heat resistance, dimensional stability, moldability and versatility. The polyester resin that forms the polyester sheet refers to a polymer including an ester group obtained by polycondensation from a polyfunctional carboxylic acid and a polyhydric alcohol, and may be preferably polyethylene terephthalate (PET), polybutylene terephthalate (PBT), polyethylene naphthalate (PEN) or the like, with polyethylene terephthalate (PET) being especially preferable from the viewpoint of heat resistance and dimensional stability.

The base material 1 may contain fine particles for the purpose of improving workability. Examples of the fine particles may include inorganic particles such as those of calcium carbonate, magnesium carbonate, calcium sulfate, barium sulfate, lithium phosphate, magnesium phosphate, calcium phosphate, aluminum oxide, silicon oxide and kaolin, organic particles such as those of acryl-based resins, and internally deposited particles. The average particle size of the fine particles is preferably 0.01 to 5.0 µm, more preferably 0.05 to 3.0 µm. The content of the fine particles in the polyester resin is preferably 0.01 to 5.0% by mass, more preferably 0.1 to 1.0% by mass. Various kinds of stabilizers, lubricants, antioxidants, antistatic agents, defoaming agents, fluorescent whitening agents and so on can be blended as necessary.

The polyester sheet for use in the present invention is produced, for example, in the following manner. First, the polyester-based resin and other raw materials are fed into a well-known melt extrusion apparatus such as an extruder, and heated to a temperature equal to or higher than the melting point of the polyester-based resin to be melted. The molten polymer is then rapidly cooled and solidified on a rotary cooling drum while being extruded so as to have a temperature equal to or lower than the glass transition temperature, so that a substantially noncrystalline unoriented sheet is obtained. The sheet is biaxially stretched to be sheeted, and is subjected to heat setting to obtain the polyester sheet. Here, the stretching method may be sequential biaxial stretching or simultaneous biaxial stretching. The sheet may also be stretched again in a longitudinal and/or lateral direction before or after being subjected to heat setting. In the present invention, the draw ratio is preferably 7 or less, more preferably 5 or less, further preferably 3 or less in terms of an area ratio for obtaining sufficient dimensional stability. When the resulting polyester sheet is used in a sheet for three-dimensional molding, the sheet for three-dimensional molding is not shrunk again in a temperature range where the injected resin is injected, and thus a sheet strength required in the temperature range can be obtained as long as the draw ratio is in a range as described above. The polyester sheet may be produced as described above, or may be obtained as a commercial product.

One or both of the surfaces of the base material 1 can be subjected to a physical or chemical surface treatment such as an oxidation method or a roughening method as desired for the purpose of improving adhesion with the later-described release layer 2. Examples of the oxidation method include corona discharge treatment, chromium oxidation treatment, flame treatment, hot air treatment and ozone/ultraviolet ray treatment methods, and examples of the roughening method include sand blasting methods and solvent treatment methods. The surface treatment is appropriately selected according to the type of the base material 1, but in general, a corona discharge treatment method is preferably used from the viewpoint of an effect, handling characteristics and so on. The base material 1 may be subjected to such a treatment that an easily adhesive layer is formed for the purpose of, for example, enhancing interlayer adhesion between the base material 1 and a layer provided thereon. When a commercial product is used as the polyester sheet, one subjected to the above-mentioned surface treatment beforehand, or one provided with an easily adhesive layer can be used as the commercial product.

The thickness of the base material 1 is normally 10 to 150 µm, preferably 10 to 125 µm, more preferably 10 to 80 µm. As the base material 1, a single-layer sheet of the above-mentioned resin, or a multi-layer sheet of the same resin or different resins can be used.

### (Release layer 2)

The release layer 2 is provide on a surface of the base material 1, on which the surface protective layer 3 is laminated, as necessary for the purpose of, for example, improving separability between the base material 1 and the surface protective layer 3. The release layer 2 may be a solid release layer covering the whole surface (wholly solid), or may be partially provided. Normally, the release layer 2 is preferably a solid release layer in view of separability.

The release layer 2 can be formed using the following resins alone or a resin composition obtained by mixing two or more thereof: thermoplastic resins such as silicone-based resins, fluorine-based resins, acryl-based resins (including, for example, acryl-melamine-based resins), polyester-based resins, polyolefin-based resins, polystyrene-based resins, polyurethane-based resins, cellulose-based resins, vinyl chloride-vinyl acetate-based copolymer resins and cellulose nitrate; copolymers of monomers that form the thermoplastic resins; and (meth)acrylic acid or urethane-modified products of these resins. Among them, acryl-based resins, polyester-based resins, polyolefin-based resins, polystyrene-based resins, copolymers of monomers that form these resins, and urethane-modified products thereof are preferable, and more specific examples include acryl-melamine-based resins alone, acryl-melamine-based resin-containing compositions, resin compositions obtained by mixing a polyester-based resin with a urethane-modified product of a copolymer of ethylene and acrylic acid, and resin compositions obtained by mixing an acryl-based resin with an emulsion of a copolymer of styrene and acryl. It is especially preferable that the release layer 2 be formed of an acryl-melamine-based resin alone, or a composition containing 50% by mass or more of an acryl-melamine-based resin among the above-mentioned resins.

The thickness of the release layer 2 is normally about 0.01 to 5 µm, preferably about 0.05 to 3 µm.

### (Transfer layer 9)

In the sheet for three-dimensional molding according to the present invention, the surface protective layer 3 formed on the support 10, and the primer layer 4, pattern layer 5, adhesive layer 6 and so on which are additionally provided as necessary form the transfer layer 9. In the present invention, the sheet for three-dimensional molding and the molded resin are integrally molded, the support 10 and the transfer layer 9 are then peeled from each other at the interface therebetween to obtain a resin molded article in which the transfer layer 9 including at least the surface protective layer 3 in the sheet for three-dimensional molding is transferred to the molded resin layer 8.

### [Surface protective layer 3]

The surface protective layer 3 is a layer that is provided on the sheet for three-dimensional molding in such a manner as to be situated on the outermost surface of the resin molded article for the purpose of improving the scratch resistance, weather resistance and the like of the decorative resin molded article.

In the present invention, the surface protective layer 3 is formed of a cured product of a resin composition containing an ionizing radiation curable resin and inorganic particles having an average particle size of 100 nm or more, the content of the inorganic particles in the surface protective layer 3 is 40% by mass or more, and the average particle size of the inorganic particles is in the range of from 100 to 500 nm, wherein the curing of the resin composition uses an amount of irradiation with ionizing radiation with which the crosslinking density of the surface protective layer is saturated. Since the surface protective layer 3 has a configuration as described above, the sheet for three-dimensional molding according to the present invention has excellent scratch resistance and moldability and has reduced generation of interference fringes. As described above, it has been considered heretofore that when inorganic particles are blended in a surface protective layer formed of a cured product of an ionizing radiation curable resin, an increase in average particle size of the inorganic particles causes generation of cracks in the surface protective layer during molding, leading to deterioration of the moldability of the sheet for three-dimensional molding. It has been considered that when in the surface protective layer, the content of inorganic particles having an average particle size as described above is increased for improving scratch resistance, the moldability of the sheet for three-dimensional molding is deteriorated. Further, when such inorganic particles are used to improve the scratch resistance of the surface protective layer, there is a problem that when the sheet for three-dimensional molding is placed under a three-wavelength light source, a rainbow-colored unevenness called an interference fringe occurs on a surface of the surface protective layer, leading to impairment of design property.

However, as a result of repeatedly conducting studies, the present inventors have unexpectedly found that when the content of inorganic particles in the surface protective layer 3 is set to a very high level, i.e. 40% by mass or more, and the average particle size of the inorganic particles is set to a large size, i.e. 100 nm or more, excellent scratch resistance and moldability are imparted, and interference fringes caused by blending of inorganic particles are effectively suppressed.

### <Inorganic particles>

The average particle size of inorganic particles is in the range of 100 to 500 nm, more preferably 150 to 250 nm for improving scratch resistance and moldability, and more effectively suppressing interference fringes. The average particle size of inorganic particles means a 50% particle size (d50: median diameter) when the particles in a solution are measured by a dynamic light scattering method, and the particle size distribution is expressed as a cumulative distribution. The particle size is a value measured using a Microtrac particle size analyzer (manufactured by Nikkiso Co., Ltd.).

The content of inorganic particles in the surface protective layer 3 is not particularly limited as long as it is 40% by mass or more, but it is preferably about 40 to 80% by mass, more preferably about 50 to 70% by mass for improving scratch resistance and moldability, and more effectively suppressing interference fringes.

The inorganic particles are preferably metal oxide particles such as silica particles (colloidal silica, fumed silica, precipitated silica and so on), alumina particles, zirconia particles, titania particles and zinc oxide particles, and for improving the highhardness property, silica particles and alumina particles are preferable, with silica particles being especially preferable.

The shape of the inorganic particles is spherical, elliptical, polyhedral, scaly or the like, and the shapes of the inorganic particles are preferably uniform and wellordered.

In the present invention, the inorganic particle such as a silica particle may be one having on the surface thereof a functional group which reacts with an ionizing radiation curable resin, or may be one that does not have on the surface thereof a functional group which reacts with an ionizing radiation curable resin. For ensuring that the surface protective layer 3 contains inorganic particles in a large amount of 40% by mass or more, the inorganic particle is preferably one that does not have on the surface thereof a functional group which reacts with an ionizing radiation curable resin. Specifically, when the inorganic particle is a reactive inorganic particle having on the surface thereof a functional group which reacts with an ionizing radiation curable resin as disclosed in, for example, Patent Documents 1 and 2, molding processing may be difficult because the ionizing radiation curable resin and the inorganic particles are crosslinked to considerably reduce the flexibility of the surface protective layer 3 when the surface protective layer 3 contains 40% by mass or more of the inorganic particles in the present invention where the ionizing radiation curable resin composition is cured in the state of a sheet for three-dimensional molding. The silica particle having on the surface thereof a functional group which reacts with an ionizing radiation curable resin is, for example, a silica particle surface-modified with a silane coupling agent having a functional group which reacts with the ionizing radiation curable resin.

### <Ionizing radiation curable resin>

The ionizing radiation curable resin to be used for formation of the surface protective layer 3 is a resin that is crosslinked and cured when irradiated with an ionizing radiation, and specific examples thereof include those in which at least one of prepolymers, oligomers and monomers each having a polymerizable unsaturated bond or an epoxy group in the molecule is appropriately mixed. Here, the ionizing radiation means an electromagnetic wave or charged particle ray having an energy quantum capable of polymerizing or crosslinking a molecule, and normally an ultraviolet (UV) ray or an electron beam (EB) is used, but the ionizing radiations also include electromagnetic waves such as an X-ray and a γ-ray, and charged particle rays such as an α-ray and an ion beam. Among ionizing radiation curable resins, electron beam curable resins are suitably used in formation of the surface protective layer 3 because they can be made solventless, do not require an initiator for photopolymerization, and exhibit stable curing characteristics.

As the monomer to be used as an ionizing radiation curable resin, (meth)acrylate monomers having a radical-polymerizable unsaturated group in the molecule are suitable, and among them, polyfunctional (meth)acrylate monomers are preferable. The polyfunctional (meth)acrylate monomer may be a (meth)acrylate monomer having two or more polymerizable unsaturated bonds in the molecule (di- or more functional), preferably three or more polymerizable unsaturated bonds in the molecule (tri- or more functional). Specific examples of the polyfunctional (meth)acrylate include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl)isocyanurate, propionic acid-modified dipentaerythritol penta(meth)acrylate, dipentaerythritol hexa(meth)acrylate, ethylene oxide-modified dipentaerythritol hexa(meth)acrylate and caprolactone-modified dipentaerythritol hexa(meth)acrylate. These monomers may be used alone, or may be used in combination of two or more thereof.

As the oligomer to be used as an ionizing radiation curable resin, (meth)acrylate oligomers having a radical-polymerizable unsaturated group in the molecule are suitable, and among them, polyfunctional (meth)acrylate oligomers having two or more polymerizable unsaturated bonds in the molecule (di-or-more functional) are preferable. Examples of the polyfunctional (meth)acrylate oligomer include polycarbonate (meth)acrylate, acrylic silicone (meth)acrylate, urethane (meth)acrylate, epoxy (meth)acrylate, polyester (meth)acrylate, polyether (meth)acrylate, polybutadiene (meth)acrylate, silicone (meth)acrylate, and oligomers having a cation-polymerizable functional group in the molecule (e.g. novolac-type epoxy resins, bisphenol-type epoxy resins, aliphatic vinyl ethers, aromatic vinyl ethers and so on). Here, the polycarbonate (meth)acrylate is not particularly limited as long as it has a carbonate bond on the polymer main chain, and has a (meth)acrylate group at the end or side chain, and the polycarbonate (meth)acrylate can be obtained by esterifying a polycarbonate polyol with (meth)acrylic acid. The polycarbonate (meth)acrylate may be, for example, urethane (meth)acrylate having a polycarbonate backbone. The urethane (meth)acrylate having a polycarbonate backbone is obtained by, for example, reacting a polycarbonate polyol, a polyvalent isocyanate compound and hydroxy (meth)acrylate. The acrylic silicone (meth)acrylate can be obtained by radical-copolymerizing a silicone macro-monomer with a (meth)acrylate monomer. The urethane (meth)acrylate can be obtained by, for example, esterifying a polyurethane oligomer with (meth)acrylic acid, the polyurethane oligomer being obtained by reaction of a polyether polyol or a polyester polyol with a polyisocyanate compound. The epoxy (meth)acrylate can be obtained by, for example, reacting (meth)acrylic acid with an oxirane ring of a relatively low-molecular-weight bisphenol-type epoxy resin or novolac-type epoxy resin to perform esterification. Carboxyl-modified epoxy (meth)acrylate obtained by partially modifying the epoxy (meth)acrylate with a dibasic carboxylic anhydride can also be used. For example, the polyester (meth)acrylate can be obtained by esterifying hydroxyl groups of a polyester oligomer with (meth)acrylic acid, the polyester oligomer being obtained by condensation of a polyvalent carboxylic acid and a polyhydric alcohol and having a hydroxyl group at each of both ends, or by esterifying a hydroxyl group at the end of an oligomer with (meth)acrylic acid, the oligomer being obtained by adding an alkylene oxide to a polyvalent carboxylic acid. The polyether (meth)acrylate can be obtained by esterifying a hydroxyl group of a polyether polyol with (meth)acrylic acid. The polybutadiene (meth)acrylate can be obtained by adding (meth)acrylic acid to the side chain of a polybutadiene oligomer. The silicone (meth)acrylate can be obtained by adding (meth)acrylic acid to the end or side chain of a silicone having a polysiloxane bond in the main chain. Among them, polycarbonate (meth)acrylate, urethane (meth)acrylate and the like are especially preferable as polyfunctional (meth)acrylate oligomers. These oligomers may be used alone, or may be used in combination of two or more thereof.

Among the above-mentioned ionizing radiation curable resins, polycarbonate (meth)acrylate is preferably used for obtaining excellent three-dimensional moldability. More preferably, polycarbonate (meth)acrylate and urethane (meth)acrylate are used in combination for securing both three-dimensional moldability and scratch resistance. When a polyfunctional (meth)acrylate monomer is used as the ionizing radiation curable resin, it is preferable to use the ionizing radiation curable resin in combination with a thermoplastic resin such as an acrylic resin for obtaining excellent three-dimensional moldability, and the mass ratio of the polyfunctional (meth)acrylate monomer and the thermoplastic resin in the ionizing radiation curable resin composition is preferably 25 : 75 to 75 : 25 for securing both three-dimensional moldability and scratch resistance.

### <Other additive components>

According to desired properties to be imparted to the surface protective layer 3, various kinds of additives can be blended in the ionizing radiation curable resin composition that forms the surface protective layer 3. Examples of the additives include weather resistance improving agents such as ultraviolet absorbers and light stabilizers, abrasion resistance improvers, polymerization inhibitors, crosslinkers, infrared absorbers, antistatic agents, bondability improvers, leveling agents, thixotropy imparting agents, coupling agents, plasticizers, antifoaming agents, fillers, solvents, colorants and matting agents. These additives can be appropriately selected from those that are commonly used, and examples of the matting agent include silica particles and aluminum hydroxide particles. As the ultraviolet absorber and light stabilizer, a reactive ultraviolet absorber and light stabilizer having a polymerizable group such as a (meth)acryloyl group in the molecule can also be used.

### <Thickness of surface protective layer 3>

The thickness of the surface protective layer 3 after curing is not particularly limited, but it is, for example, 1 to 1000 µm, preferably 1 to 50 µm, further preferably 1 to 30 µm. When the thickness of the surface protective layer 3 after curing falls within the above-mentioned range, sufficient properties as a surface protective layer, such as scratch resistance and weather resistance, are obtained, and the resin can be uniformly irradiated with an ionizing radiation, and therefore can be uniformly cured, thus being advantageous in terms of economy. Further, when the thickness of the surface protective layer 3 after curing falls within the above-mentioned range, the three-dimensional moldability of the sheet for three-dimensional molding is further improved, and therefore high followability to a complicated three-dimensional shape in automobile interior applications or the like can be obtained. Thus, the sheet for three-dimensional molding according to the present invention is also useful as a sheet for three-dimensional molding particularly of a member required to have the surface protective layer 3 having a large thickness, e.g. a vehicle exterior component etc. because sufficiently high three-dimensional moldability is obtained even when the thickness of the surface protective layer 3 is made larger than conventional ones.

### <Formation of surface protective layer 3>

Formation of the surface protective layer 3 is performed by, for example, preparing an ionizing radiation curable resin composition containing an ionizing radiation curable resin, and applying and crosslinking/curing the ionizing radiation curable resin composition. The viscosity of the ionizing radiation curable resin composition may be a viscosity that allows an uncured resin layer to be formed on a surface of the base material 1 or the release layer 2 by an application method as described later.

In the present invention, an uncured resin layer is formed by applying a prepared application liquid onto a surface of the base material 1 or the release layer 2 by a known method such as gravure coating, bar coating, roll coating, reverse roll coating or comma coating, preferably gravure coating so that the above-mentioned thickness is obtained.

The uncured resin layer formed in this manner is irradiated with an ionizing radiation such as an electron beam or an ultraviolet ray to cure the uncured resin layer, so that the surface protective layer 3 is formed. When an electron beam is used as the ionizing radiation, an accelerating voltage thereof can be appropriately selected according to a resin to be used and a thickness of the layer, but the accelerating voltage is normally about 70 to 300 kV.

In irradiation of an electron beam, the transmission capacity increases as the accelerating voltage becomes higher, and therefore when a resin that is easily degraded by irradiation of an electron beam is used in a layer under the surface protective layer 3, an accelerating voltage is selected so that the transmission depth of the electron beam is substantially equal to the thickness of the surface protective layer 3. Accordingly, a layer situated under the surface protective layer 3 can be inhibited from being excessively irradiated with an electron beam, so that degradation of the layers by an excessive electron beam can be minimized.

The amount of irradiation is an amount with which the crosslinking density of the surface protective layer 3 is saturated, and the amount of irradiation is selected within a range of normally 5 to 300 kGy (0.5 to 30 Mrad), preferably 10 to 50 kGy (1 to 5 Mrad).

Further, the electron beam source is not particularly limited, and various kinds of electron beam accelerators can be used such as, for example, those of Cockcroft-Walton type, Van de Graaff type, tuned transformer type, insulated core transformer type, linear type, dynamitron type and high frequency type.

When an ultraviolet ray is used as the ionizing radiation, it is practical to radiate light including an ultraviolet ray having a wavelength of 190 to 380 nm. The ultraviolet ray source is not particularly limited, and examples thereof include highpressure mercury lamps, low-pressure mercury lamps, metal halide lamps, carbon arc lamps and ultraviolet-ray emitting diodes (LED-UV).

The surface protective layer 3 thus formed may be treated to give thereto functions such as a hard coat function, an anticlouding coat function, an antifouling coat function, an antiglare coat function, an antireflection coat function, an ultraviolet shielding coat function and an infrared shielding coat function by adding various kinds of additives.

### [Primer layer 4]

The primer layer 4 is a layer that is included as necessary for the purpose of, for example, improving adhesion between the surface protective layer 3 and a layer situated thereunder (on a side opposite to the support 10). The primer layer 4 can be formed from a resin.

The resin for forming the primer layer 4 is not particularly limited, and examples thereof include urethane resins, acrylic resins, (meth)acrylic-urethane copolymer resins, polyester resins and butyral resins. Among these resins, urethane resins, acrylic resins and (meth)acrylic-urethane copolymer resins are preferable. These resins may be used alone, or may be used in combination of two or more thereof.

As the urethane resin, a polyurethane having a polyol (polyhydric alcohol) as a main agent and an isocyanate as a crosslinker (curing agent) can be used. The polyol may be a compound having two or more hydroxyl groups in the molecule, and specific examples thereof include polyester polyol, polyethylene glycol, polypropylene glycol, acrylic polyol and polyether polyol. Specific examples of the isocyanate include polyvalent isocyanates having two or more isocyanate groups in the molecule; aromatic isocyanates such as 4,4-diphenylmethane diisocyanate; and aliphatic (or alicyclic) isocyanates such as hexamethylene diisocyanate, isophorone diisocyanate, hydrogenated tolylene diisocyanate and hydrogenated diphenylmethane diisocyanate.

Among the urethane resins, combinations of acrylic polyol or polyester polyol as a polyol and hexamethylene diisocyanate or 4,4-diphenylmethane diisocyanate as a crosslinker are preferable, and combinations of acrylic polyol and hexamethylene diisocyanate are further preferable from the viewpoint of improvement of adhesion after crosslinking, etc.

The acrylic resin is not particularly limited, and examples thereof include homopolymers of a (meth)acrylic acid ester, copolymers of two or more different (meth)acrylic acid ester monomers, and copolymers of a (meth)acrylic acid ester and other monomers. More specific examples of the (meth)acrylic resin include (meth)acrylic acid esters such as polymethyl (meth)acrylate, polyethyl (meth)acrylate, polypropyl (meth)acrylate, polybutyl (meth)acrylate, methyl (meth)acrylate-butyl (meth)acrylate copolymers, ethyl (meth)acrylate-butyl (meth)acrylate copolymers, ethylene-methyl (meth)acrylate copolymers and styrene-methyl (meth)acrylate copolymers. These acrylic resins may be used alone, or may be used in combination of two or more thereof.

The (meth)acrylic-urethane copolymer resin is not particularly limited, and examples thereof include acrylic-urethane (polyester urethane) block copolymer-based resins. As the curing agent, the above-mentioned various kinds of isocyanates are used. The ratio of acryl and urethane in the acrylic-urethane (polyester urethane) block copolymer-based resin is not particularly limited, but it is, for example, 9/1 to 1/9, preferably 8/2 to 2/8 in terms of an acrylic/urethane ratio (mass ratio).

The thickness of the primer layer 4 is not particularly limited, but it is, for example, about 0.1 to 10 µm, preferably about 1 to 10 µm. When the primer layer 4 satisfies the above-mentioned thickness, the whether resistance of the sheet for three-dimensional molding is further improved, and breakage, rupture, whitening and the like of the surface protective layer 3 can be effectively suppressed.

The primer layer 4 is formed by a normal coating method such as gravure coating, gravure reverse coating, gravure offset coating, spinner coating, roll coating, reverse roll coating, kiss coating, wheeler coating, dip coating, solid coating with a silk screen, wire bar coating, flow coating, comma coating, pour coating, blushing or spray coating, or a transfer coating method using a resin for forming the primer layer 4. Here, the transfer coating method is a method in which a coating film of a primer layer or adhesive layer is formed on a thin sheet (film base material), and thereafter the surface of the intended layer in the sheet for three-dimensional molding is coated with the coating film.

### [Decorative layer 5]

The decorative layer 5 is a layer that is provided as necessary for imparting decorativeness to a resin molded article. The decorative layer 5 normally includes a pattern layer and/or a masking layer. Here, the pattern layer is a layer that is provided for expressing patterned patterns such as figures and characters, and the masking layer is a layer that is usually a wholly solid layer, and is provided for masking coloring of a molded resin etc. The masking layer may be provided inside the pattern layer for bringing the pattern of the pattern layer into prominent, or the masking layer alone may form the decorative layer 5.

The pattern of the patterned layer is not particularly limited, and examples thereof include patterns of woody textures, pebble-like textures, cloth-like textures, sand-like textures, geometrical patterns, characters and so on.

The decorative layer 5 is formed using a printing ink containing a colorant, a binder resin, and a solvent or dispersion medium.

The colorant in the printing ink to be used for formation of the decorative layer 5 is not particularly limited, and examples thereof include metallic pigments formed of scalelike foil powders of metals such as aluminum, chromium, nickel, tin, titanium, iron phosphate, copper, gold, silver and brass, alloys or metal compounds; pearly luster (pearl) pigments formed of foil powders of mica-like iron oxide, titanium dioxide-coated mica, titanium dioxide-coated bismuth oxychloride, bismuth oxychloride, titanium dioxide-coated talc, scalelike foils, colored titanium dioxide-coated mica, basic lead carbonate and the like; fluorescent pigments such as strontium aluminate, calcium aluminate, barium aluminate, zinc sulfide and calcium sulfide; white inorganic pigments such as titanium dioxide, zinc white and antimony trioxide; inorganic pigments such as zinc white, iron red, vermilion, ultramarine blue, cobalt blue, titanium yellow, chrome yellow and carbon black; organic pigments (including dyes) such as isoindolinone yellow, Hansa Yellow A, quinacridone red, permanent red 4R, phthalocyanine blue, indanthrene blue RS and aniline black. These colorants may be used alone, or may be used in combination of two or more thereof.

The binder resin in the printing ink to be used for formation of the decorative layer 5 is not particularly limited, and examples thereof include acryl-based resins, styrene-based resins, polyester-based resins, urethane-based resins, chlorinated polyolefin-based resins, vinyl chloride-vinyl acetate copolymer-based resins, polyvinyl butyral resins, alkyd-based resins, petroleum-based resins, ketone resins, epoxy-based resins, melamine-based resins, fluorine-based resins, silicone-based resins, cellulose derivatives and rubber-based resins. These binder resins may be used alone, or may be used in combination of two or more thereof.

The solvent or dispersion medium to be used for formation of the decorative layer 5 is not particularly limited, and examples thereof include petroleum-based organic solvents such as hexane, heptane, octane, toluene, xylene, ethylbenzene, cyclohexane and methylcyclohexane; ester-based organic solvents such as ethyl acetate, butyl acetate, acetic acid-2-methoxyethyl and acetic acid-2-ethoxyethyl; alcohol-based organic solvents such as methyl alcohol, ethyl alcohol, normal-propyl alcohol, isopropyl alcohol, isobutyl alcohol, ethylene glycol and propylene glycol; ketone-based organic solvents such as acetone, methyl ethyl ketone, methyl isobutyl ketone and cyclohexanone; ether-based organic solvents such as diethyl ether, dioxane and tetrahydrofuran; chlorine-based organic solvents such as dichloromethane, carbon tetrachloride, trichloroethylene and tetrachloroethylene; and water. These solvents or dispersion media may be used alone, or may be used in combination of two or more thereof.

The printing ink to be used for formation of the decorative layer 5 may contain an anti-settling agent, a curing catalyst, an ultraviolet absorber, an antioxidant, a leveling agent, a thickener, a defoaming agent, a lubricant and the like as necessary.

The decorative layer 5 can be formed on the adjacent layer such as, for example, the surface protective layer 3 or the primer layer 4 by a known printing method such as gravure printing, flexographic printing, silk screen printing or offset printing. When the decorative layer 5 is provided in the form of a pattern layer and a masking layer, one layer may be laminated and dried, followed by laminating and drying the other layer.

The thickness of the decorative layer 5 is not particularly limited, and for example, it is about 1 to 40 µm, preferably about 3 to 30 µm.

### [Adhesive layer 6]

The adhesive layer 6 is a layer that is provided on a back surface (on the molded resin layer 8 side) of the decorative layer 5, the surface protective layer 3 or the like as necessary for the purpose of, for example, adhesion between the sheet for three-dimensional molding and the molded resin layer 8. The resin for forming the adhesive layer 6 is not particularly limited as long as it can improve adhesion and bondability between the sheet for three-dimensional molding and the molded resin layer, and examples thereof include thermoplastic resins and thermosetting resins. Examples of the thermoplastic resin include acrylic resins, acryl-modified polyolefin resins, chlorinated polyolefin resins, vinyl chloride-vinyl acetate copolymers, thermoplastic urethane resins, thermoplastic polyester resins, polyamide resins and rubber-based resins. The thermoplastic resins may be used alone, or may be used in combination of two or more thereof. Examples of the thermosetting resin include urethane resins and epoxy resins. The thermosetting resins may be used alone, or may be used in combination of two or more thereof.

The adhesive layer 6 is not a layer that is necessarily needed, but it is preferable to provide the adhesive layer 6 when it is conceivable that the sheet for three-dimensional molding according to the present invention is applied to a decoration method in which the sheet for three-dimensional molding is bonded onto a previously provided resin molded body, such as, for example, a vacuum press-bonding method as described later. When the decorative sheet is used in a vacuum press-bonding method, it is preferable to form the adhesive layer 6 using, among various resins described above, one that is commonly used as a resin which exhibits bondability under pressure or heating.

The thickness of the adhesive layer 6 is not particularly limited, but it is, for example, about 0.1 to 30 µm, preferably about 0.5 to 20 µm, further preferably about 1 to 8 µm.

### [Transparent resin layer 7]

In the transfer film for three-dimensional molding according to the present invention, a transparent resin layer 7 may be provided as necessary for the purpose of, for example, improving adhesion between the primer layer 4 and the adhesive layer 6. Since the transparent resin layer 7 can improve adhesion between the primer layer 4 and the adhesive layer 6 when the transfer film for three-dimensional molding according to the present invention does not include the decorative layer 5, it is particularly useful to provide the transparent resin layer 7 when the transfer film for three-dimensional molding according to the present invention is used for production of a resin molded article which is required to have transparency. The transparent resin layer 7 is not particularly limited as long as it is transparent, and the transparent resin layer 7 may be colorless and transparent, colored and transparent, semi-transparent or the like. Examples of the resin component that forms the transparent resin layer 7 include the binder resins shown as an example in the decorative layer 5.

The transparent resin layer 7 may contain various kinds of additives such as a filler, a delustering agent, a foaming agent, a flame retardant, a lubricant, an antistatic agent, an antioxidant, an ultraviolet absorber, a light stabilizer, a radical scavenger and a soft component (e.g. rubber) as necessary.

The transparent resin layer 7 can be formed by a known printing method such as gravure printing, flexographic printing, silk screen printing or offset printing.

The thickness of the transparent resin layer 7 is not particularly limited, and it is generally about 0.1 to 10 µm, preferably about 1 to 10 µm.

### 3. Resin molded article and method for production thereof

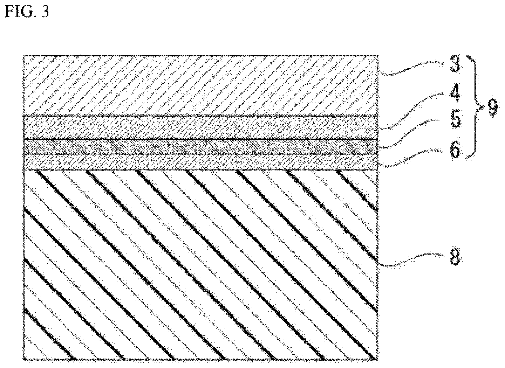

The resin molded article according to the present invention is formed by laminating a molded resin on the sheet for three-dimensional molding according to the present invention, and can be produced by, for example, transferring the surface protective layer 3 to the molded resin layer 8 using the sheet for three-dimensional molding for transfer according to the present invention. Specifically, for example, the sheet for three-dimensional molding according to the present invention is used as a sheet for injection molding simultaneous transfer, and the molded resin layer 8 is laminated on a side opposite to the support 10 in the sheet for three-dimensional molding to obtain a resin molded article with a support in which at least the molded resin layer 8, the surface protective layer 3 and the support 10 are laminated in this order (see, for example, Fig. 2). Next, the support 10 is separated from the resin molded article with a support to obtain the resin molded article according to the present invention in which at least the molded resin layer 8 and the surface protective layer 3 are laminated (see, for example, Fig. 3). As shown in Fig. 3, the resin molded article according to the present invention may be further provided with at least one of the above-mentioned decorative layer 5, primer layer 4, adhesive layer 6 and so on as necessary. In the injection molding simultaneous transfer method, the surface protective layer 3, the decorative layer 5, the primer layer 4, the adhesive layer 6 and so on form the transfer layer 9, and the base material 1 and the release layer 2 form the support 10 in the sheet for three-dimensional molding, and the transfer layer 9 in the sheet for three-dimensional molding is transferred to the molded resin layer 8 to obtain a resin molded article.

The method for producing the resin molded article according to the present invention using the sheet for three-dimensional molding for transfer is, for example, a method including the steps of (1) to (5):
(1) heating the sheet for three-dimensional molding for transfer from the surface protective layer side by a heating platen while the surface protective layer side (side opposite to the support) of the sheet for three-dimensional molding for transfer is kept facing the inside of a mold;
(2) preliminarily molding (vacuum-molding) the sheet for three-dimensional molding for transfer so as to follow the shape of the inside of a mold, and thus bringing the sheet for three-dimensional molding into close contact with the inner surface of the mold to close the mold;
(3) injecting a resin into the mold;
(4) cooling the injected resin, and then taking a decorative resin molded article (decorative resin molded article with a support) from the mold; and
(5) separating the support from the surface protective layer of the decorative resin molded article.

In both the steps (1) and (2), the temperature at which the sheet for three-dimensional molding is heated is preferably equal to or higher than a temperature in the vicinity of the glass transition temperature and lower than the melting temperature (or melting point) of the base material 1. Normally, it is more preferable to heat the sheet for three-dimensional molding at a temperature in the vicinity of the glass transition temperature of the base material 1. The vicinity of the glass transition temperature refers to a range of the glass transition temperature ± about 5°C, and is generally about 70 to 130°C when a polyester film suitable as the base material 1 is used. When a mold having a shape which is not so complicated is used, the step of heating the transfer film for three-dimensional molding and the step of preliminarily molding the transfer film for three-dimensional molding may be omitted to mold the transfer film for three-dimensional molding in the shape of the mold by means of heat and pressure from the injected resin in the later-described step (3).

In the step (3), the later-described molding resin is melted, and injected into a cavity to integrate the sheet for three-dimensional molding and the molding resin with each other. When the molding resin is a thermoplastic resin, the resin is heated and melted to be brought into a flowing state, and when the molding resin is a thermosetting resin, an uncured liquid composition is injected in a flowing state at room temperature or by appropriately heating the composition, and cooled to be solidified. Accordingly, the sheet for three-dimensional molding is integrally attached to the formed resin molded body to form a resin molded article with a support. The temperature at which the injected resin is heated depends on the type of the molding resin, but is generally about 180 to 320°C.

The thus obtained resin molded article with a support is cooled and then taken out from the mold in the step (4), and thereafter, in the step (5), the support 10 is separated from the surface protective layer 3 to obtain a resin molded article. The step of separating the support 10 from the surface protective layer 3 may be carried out concurrently with the step of taking out the decorative resin molded article from the mold. In other words, the step (5) may be included in the step (4).

Further, production of the resin molded article can be performed by a vacuum press-bonding method. In the vacuum press-bonding method, first the sheet for three-dimensional molding according to the present invention and the resin molded body are placed in a vacuum press-bonding machine including a first vacuum chamber situated on the upper side and a second vacuum chamber situated on the lower side in such a manner that the sheet for three-dimensional molding is on the first vacuum chamber side and the resin molded body is on the second vacuum chamber side, and that a side on which the molded resin layer 8 is laminated in the sheet for three-dimensional molding faces the resin molded body side. The two vacuum chambers are then evacuated. The resin molded body is placed on a lift table that is provided on the second vacuum chamber side and is capable of moving up and down. Then, the first vacuum chamber is pressurized, and the molded body is pressed against the sheet for three-dimensional molding with the lift table, and by using a pressure difference between the two vacuum chambers, the sheet for three-dimensional molding is bonded to the surface of the resin molded body while being stretched. Finally, the two vacuum chambers are released to atmospheric pressure, the support 10 is separated, and an unnecessary portion of the sheet for three-dimensional molding is trimmed off as necessary, so that the resin molded article according to the present invention can be obtained.

Preferably, the vacuum press-bonding method includes the step of heating the sheet for three-dimensional molding for softening the sheet for three-dimensional molding to improve the moldability thereof before the step of pressing the molded body against the sheet for three-dimensional molding. The vacuum press-bonding method including such a step may be referred to particularly as a vacuum heating and press-bonding method. The heating temperature in such a step may be appropriately selected according to the type of the resin that forms the sheet for three-dimensional molding, or the thickness of the sheet for three-dimensional molding, but when for example, a polyester resin film or an acrylic resin film is used as the base material 1, the heating temperature may be normally about 60 to 200°C.

In the resin molded article of the present invention, a resin appropriate to an intended use may be selected to form the molded resin layer 8. The molding resin for forming the molded resin layer 8 may be a thermoplastic resin or may be a thermosetting resin.

Specific examples of the thermoplastic resin include polyolefin-based resins such as polyethylene and polypropylene, ABS resins, styrene resins, polycarbonate resins, acrylic resins and vinyl chloride-based resins. These thermoplastic resins may be used alone, or may be used in combination of two or more thereof.

Examples of the thermosetting resin include urethane resins and epoxy resins. These thermosetting resins may be used alone, or may be used in combination of two or more thereof.

Since in the resin molded article with a support, the support 10 serves as a protective sheet for the resin molded article, the support 10 may be maintained as it is without being separated after production of the resin molded article with a support, and may be separated at the time of use. When used in this manner, the resin molded article can be prevented from being scratched by, for example, scraping during transportation.

The resin molded article according to the present invention has excellent scratch resistance, and has effectively reduced interference fringes. Therefore, the resin molded article according to the present invention can be used for, for example, interior materials or exterior materials of vehicles such as automobiles; fittings such as window frames and door frames; interior materials of buildings such as walls, floors and ceilings; housings of household electric appliances such as television receivers and air conditioners; and containers etc.

### EXAMPLES

Hereinafter, the present invention will be described in detail by way of examples and comparative examples. However, the present invention is not limited to examples.

### [Production of sheet for three-dimensional molding]

The following procedure was carried out to produce a sheet for three-dimensional molding (transfer sheet for three-dimensional molding) in which the average particle size and content of silica particles contained in a surface protective layer were as described in Table 1. The average particle size of the silica particles is a value measured by the above-mentioned method.

A polyethylene terephthalate film (thickness: 75 µm) with an easily adhesive layer formed on one surface thereof was used as a base material. A coating solution mainly composed of a melamine-based resin was applied to a surface of the easily adhesive layer of the polyethylene terephthalate film by gravure printing to form a release layer (thickness: 1 µm). A resin composition containing an ionizing radiation curable resin as described below and silica particles in an amount as shown in Table 1 was applied onto the release layer by a bar coater in such a manner that the thickness after curing would be 3 µm, so that a surface protective layer forming coating film was formed. The coating film was irradiated with an electron beam having an accelerating voltage of 165 kV and an amount of irradiation of 50 kGy (5 Mrad), so that the surface protective layer forming coating film was cured to form a surface protective layer. A primer layer forming resin composition containing a polyurethane-based two-liquid curable resin (containing an acryl-based polymer polyol and xylylene diisocyanate as a curing agent with the NCO equivalent being equal to the OH equivalent; the glass transition temperature Tg of the acryl-based polymer polyol in an uncured state is 100°C) was applied onto the surface protective layer by gravure printing to form a primer layer (thickness: 1.5 µm). Further, a decorative layer (thickness: 2 µm) with a black solid pattern was formed on the primer layer by gravure printing using a decorative layer forming black ink composition containing an acrylic resin and a vinyl chloride-vinyl acetate-based copolymer resin as a binder resin (50% by mass of acrylic resin and 50% by mass of vinyl chloride-vinyl acetate-based copolymer resin). Further, using an adhesive layer forming resin composition containing an acryl-based resin (softening temperature: 125°C), an adhesive layer (thickness: 2 µm) was formed on the decorative layer by gravure printing to produce a sheet for three-dimensional molding with a base material, a release layer, a surface protective layer, a primer layer, a decorative layer and an adhesive layer laminated in this order.

### <Ionizing radiation curable resin>

- Ionizing radiation curable resin containing 40 parts by mass of a polyfunctional (meth)acrylate monomer (pentaerythritol triacrylate, molecular weight: 298), 60 parts by mass of a thermoplastic resin (acrylic resin, glass transition temperature Tg: 105°C) having a weight average molecular weight Mw of 150000, 1.1 parts by mass of an ultraviolet absorber, 0.6 parts by mass of a light stabilizer and 0.2 parts by mass of a leveling agent.

### [Production of resin molded article]

Each sheet for three-dimensional molding, which was obtained as described above, was placed in a mold, heated at 350°C for 7 seconds with an infrared heater, and preliminarily molded so as to follow the shape of the inside of the mold, so that the mold was closed (maximum draw ratio: 100%). Thereafter, the injected resin was injected into the cavity of the mold to integrally mold the sheet for three-dimensional molding and the injected resin, the molded product was taken out from the mold, and simultaneously the support (base material and release layer) was separated and removed to obtain a resin molded article.

### <Evaluation of scratch resistance>

The surface of each resin molded article obtained as described above was manually scraped back and forth ten times over a distance of 10 cm using an abrasive paper with alumina abrasive grains having an average grain size of 9 µm with 800 g weight placed on the abrasive paper. Thereafter, the state of the surface was visually observed, and evaluated in accordance with the following criteria. The results are shown in Table 1.
○: A part of the surface was only slightly scratched.
△: The surface was scratched in its entirety, but was not whitened.
×: The surface was markedly scratched in its entirety, and whitened.

### <Evaluation of interference fringes>

The surface of each resin molded article obtained as described above was irradiated with visible light from a three-wavelength fluorescent lamp, and presence/absence of interference fringes was evaluated in accordance with the following criteria. The results are shown in Table 1.
○: The surface of the resin molded article had no interference fringes.
△: The surface of the resin molded article had slight interference fringes, but there was no problem in practical use.
×: The surface of the resin molded article had distinct interference fringes.

### <Evaluation of three-dimensional moldability>

The state of the molded article in production of the resin molded article was examined, and three-dimensional moldability was evaluated in accordance with the following criteria. The results are shown in Table 1.

### (Evaluation criteria for three-dimensional moldability)

○: The surface protective layer was neither cracked nor whitened, and it was able to satisfactorily follow the shape of the mold.
△: A part of a three-dimensional shape portion or a portion stretched at the highest draw ratio was slightly film-cracked or whitened, but there was no problem in practical use.
×: It was not able to follow the shape of the mold, and the surface protective layer was markedly cracked and whitened.

**[Table 1]**

| Silica particles | Content (% by mass) | 20% by mass | | | | | | | 30% by mass | | | | | | |
|---|---|---|---|---|---|---|---|---|---|---|---|---|---|---|---|
| | Average particle size (µm) | 10 | 20 | 40 | 60 | 100 | 200 | 500 | 10 | 20 | 40 | 60 | 100 | 200 | 500 |
| Evaluation of scratch resistance | | × | × | × | × | × | × | × | × | × | × | × | × | × | × |
| Evaluation of interference fringes | | × | × | × | × | × | × | × | × | × | × | × | × | × | × |
| Evaluation of moldability | | ○ | ○ | ○ | ○ | ○ | ○ | ○ | ○ | ○ | ○ | ○ | ○ | ○ | ○ |

| Silica particles | Content (% by mass) | 40% by mass | | | | | | | 50% by mass | | | | | | |
|---|---|---|---|---|---|---|---|---|---|---|---|---|---|---|---|
| | Average particle size (µm) | 10 | 20 | 40 | 60 | 100 | 200 | 500 | 10 | 20 | 40 | 60 | 100 | 200 | 500 |
| Evaluation of scratch resistance | | Δ | Δ | Δ | Δ | Δ | Δ | Δ | ○ | ○ | ○ | ○ | ○ | ○ | ○ |
| Evaluation of interference fringes | | × | × | × | × | Δ | Δ | ○ | × | × | × | × | ○ | ○ | ○ |
| Evaluation of moldability | | ○ | ○ | ○ | ○ | ○ | ○ | ○ | ○ | ○ | ○ | ○ | ○ | ○ | ○ |

| Silica particles | Content (% by mass) | 60% by mass | | | | | | | | | | | | | |
|---|---|---|---|---|---|---|---|---|---|---|---|---|---|---|---|
| | Average particle size (µm) | 10 | 20 | 40 | 60 | 100 | 200 | 500 | | | | | | | |
| Evaluation of scratch resistance | | ○ | ○ | ○ | ○ | ○ | ○ | ○ | | | | | | | |
| Evaluation of interference fringes | | × | × | × | × | ○ | ○ | ○ | | | | | | | |
| Evaluation of moldability | | ○ | ○ | ○ | ○ | ○ | ○ | Δ | | | | | | | |

From the results shown in Table 1, it is apparent that when the surface protective layer is formed of a cured product of a resin composition containing an ionizing radiation curable resin and inorganic particles having an average particle size of 100 nm or more, and the content of the inorganic particles in the surface protective layer is set to 40% by mass or more, a sheet for three-dimensional molding, which is not only excellent in scratch resistance and three-dimensional moldability but also has effectively reduced interference fringes, can be obtained.

### DESCRIPTION OF REFERENCE SIGNS

1: Base material
2: Release layer
3: Surface protective layer
4: Primer layer
5: Decorative layer
6: Adhesive layer
8: Molded resin layer
9: Transfer layer
10: Support

## Claims

1. A sheet for three-dimensional molding which includes a base material (1) with at least a surface protective layer (3) laminated thereon, wherein
the surface protective layer (3) is formed of a cured product of a resin composition containing an ionizing radiation curable resin and inorganic particles having an average particle size of 100 nm or more, wherein the curing of the resin composition uses an amount of irradiation with ionizing radiation with which the crosslinking density of the surface protective layer (3) is saturated,
the content of the inorganic particles in the surface protective layer (3) is 40% by mass or more, and
the average particle size of the inorganic particles is in the range of 100 to 500 nm, wherein the average particle size of inorganic particles is defined as described in the description.

2. The sheet for three-dimensional molding according to claim 1, wherein the average particle size of the inorganic particles is in the range of 150 to 250 nm.

3. The sheet for three-dimensional molding according to claim 1 or 2, wherein the inorganic particles are silica particles.

4. The sheet for three-dimensional molding according to claim 3, wherein each of the silica particles does not have on the surface thereof a functional group which reacts with the ionizing radiation curable resin.

5. The sheet for three-dimensional molding according to any one of claims 1 to 4, wherein at least one selected from the group consisting of a primer layer (4), a decorative layer (5) and an adhesive layer (6) is laminated on the surface protective layer (3).

6. The sheet for three-dimensional molding according to any one of claims 1 to 5, wherein a release layer (2) is formed on a surface of the base material (1) on the surface protective layer (3) side.

7. A resin molded article obtained by transferring the surface protective layer (3) to a molded resin layer (8) using the sheet for three-dimensional molding according to any one of claims 1 to 6.

8. A method for producing a resin molded article, the method comprising the step of transferring the surface protective layer (3) to a molded resin layer (8) using the sheet for three-dimensional molding according to any one of claims 1 to 6.

9. Use of a laminated sheet according to any of claims 1 to 6 for decorating a molded resin layer (8).

## Patentansprüche

1. Folie zum dreidimensionalen Formen, die ein Basismaterial (1) mit mindestens einer darauf laminierten Oberflächenschutzschicht (3) umfasst, wobei
die Oberflächenschutzschicht (3) aus einem gehärteten Produkt einer Harzzusammensetzung gebildet ist, die ein durch ionisierende Strahlung härtbares Harz und anorganische Teilchen mit einer durchschnittlichen Teilchengröße von 100 nm oder mehr enthält, wobei beim Härten der Harzzusammensetzung eine Bestrahlungsmenge mit ionisierender Strahlung verwendet wird, mit der die Vernetzungsdichte der Oberflächenschutzschicht (3) gesättigt ist,
der Gehalt der anorganischen Teilchen in der Oberflächenschutzschicht (3) 40 Massenprozent oder mehr beträgt, und
die durchschnittliche Teilchengröße der anorganischen Teilchen im Bereich von 100 bis 500 nm liegt, wobei die durchschnittliche Teilchengröße der anorganischen Teilchen wie in der Beschreibung beschrieben definiert ist.

2. Folie zum dreidimensionalen Formen nach Anspruch 1, wobei die durchschnittliche Teilchengröße der anorganischen Teilchen im Bereich von 150 bis 250 nm liegt.

3. Folie zum dreidimensionalen Formen nach Anspruch 1 oder 2, wobei die anorganischen Teilchen Siliciumdioxidteilchen sind.

4. Folie zum dreidimensionalen Formen nach Anspruch 3, wobei jedes der Siliciumdioxidteilchen auf seiner Oberfläche keine funktionelle Gruppe aufweist, die mit dem durch ionisierende Strahlung härtbaren Harz reagiert.

5. Folie zum dreidimensionalen Formen nach einem der Ansprüche 1 bis 4, wobei mindestens eine Schicht, ausgewählt aus der Gruppe bestehend aus einer Primerschicht (4), einer Dekorschicht (5) und einer Klebstoffschicht (6), auf die Oberflächenschutzschicht (3) laminiert ist.

6. Folie zum dreidimensionalen Formen nach einem der Ansprüche 1 bis 5, wobei auf einer Oberfläche des Basismaterials (1) auf der Seite der Oberflächenschutzschicht (3) eine Trennschicht (2) ausgebildet ist.

7. Harzformteil, das durch Übertragen der Oberflächenschutzschicht (3) auf eine geformte Harzschicht (8) unter Verwendung der Folie zum dreidimensionalen Formen nach einem der Ansprüche 1 bis 6 erlangt wird.

8. Verfahren zum Herstellen eines Harzformteils, wobei das Verfahren den Schritt des Übertragens der Oberflächenschutzschicht (3) auf eine geformte Harzschicht (8) unter Verwendung der Folie zum dreidimensionalen Formen nach einem der Ansprüche 1 bis 6 umfasst.

9. Verwendung einer laminierten Folie nach einem der Ansprüche 1 bis 6 zur Dekoration einer geformten Harzschicht (8).

## Revendications

1. Feuille pour moulage tridimensionnel, qui inclut un matériau de base (1) sur lequel est déposée par stratification au moins une couche protectrice (3) de surface, dans lequel
la couche protectrice (3) de surface est constituée d'un produit durci d'une composition de résine contenant une résine durcissable par un rayonnement ionisant et des particules inorganiques ayant une taille moyenne de particule de 100 nm ou plus, le durcissement de la composition de résine utilisant une quantité d'irradiation par un rayonnement ionisant avec laquelle la densité de réticulation de la couche protectrice (3) de surface est saturée,
la teneur en les particules inorganiques de la couche protectrice (3) de surface est de 40 % en masse ou plus, et
la taille moyenne de particule des particules inorganiques est dans la plage de 100 à 500 nm, la taille moyenne de particule de particules inorganiques étant définie comme décrit dans la description.

2. Feuille pour moulage tridimensionnel selon la revendication 1, dans laquelle la taille moyenne de particule des particules inorganiques est dans la plage de 150 à 250 nm.

3. Feuille pour moulage tridimensionnel selon la revendication 1 ou 2, dans laquelle les particules inorganiques sont des particules de silice.

4. Feuille pour moulage tridimensionnel selon la revendication 3, dans laquelle chacune des particules de silice ne comporte pas sur la surface de celle-ci un groupe fonctionnel qui réagit avec la résine durcissable par un rayonnement ionisant.

5. Feuille pour moulage tridimensionnel selon l'une quelconque des revendications 1 à 4, dans laquelle au moins une choisie dans le groupe constitué par une couche de primaire (4), une couche décorative (5) et une couche adhésive (6) est déposée par stratification sur la couche protectrice (3) de surface.

6. Feuille pour moulage tridimensionnel selon l'une quelconque des revendications 1 à 5, dans laquelle une couche antiadhésive (2) est formée sur une surface du matériau de base (1) du côté couche protectrice (3) de surface.

7. Article moulé à base de résine obtenu par transfert de la couche protectrice (3) de surface sur une couche (8) de résine moulée, à l'aide de la feuille pour moulage tridimensionnel selon l'une quelconque des revendications 1 à 6.

8. Procédé pour produire un article moulé à base de résine, le procédé comprenant l'étape consistant à transférer la couche protectrice (3) de surface sur une couche (8) de résine moulée, à l'aide de la feuille pour moulage tridimensionnel selon l'une quelconque des revendications 1 à 6.

9. Utilisation d'une feuille stratifiée selon l'une quelconque des revendications 1 à 6 pour décorer une couche (8) de résine moulée.
